# EUROPEAN PATENT APPLICATION

(11) **EP 1 788 538 A1**
(43) Date of publication of application: **23.05.2007**
(21) Application number: 06021270.1
(22) Date of filing: 10.10.2006
(51) Int. Cl.: G09B 5/06

(54) **Apparatus and method for the manufacture of audio books**

(30) Priority: 14.10.2005 GB 0520840
(71) Applicant: Five Dads Ltd., Bracknell Berkshire RG12 1LL (GB)
(72) Inventor: Watson, David Andrew, Caversham Berkshire RG4 7JL (GB); Coombs, Christopher Kenneth, Kingston upon Thames Surrey KT2 5RS (GB); Lewis, Sean Christopher, London W6 7PZ (GB); Clark, Raymond Vincent, Reading Berkshire RG12 0RE (GB); Clark, Andrew Howard, Buckinghamshire SL8 5RE (GB); Paton, Scott Murray, High St. Hurley SL6 5NB (GB)
(74) Representative: Harrison, Robert John

(57) **Abstract**

The invention relates to a method for the manufacture of an audio book comprising a first step of obtaining an authorisation key to access a text file (90) on a server, a second step of displaying content of the text file (90) at a personal computer (10), a third step of producing an audio file (45) at the personal computer (10) corresponding to the text file (90) and a fourth step of combining the audio file (45) with a sound effects file (100) to produce the audio book.

The invention further provides for a device for the manufacture of an audio book. The device comprises an authorisation key for authorising access to a text file (90), a display device (55) for displaying content of the text file (90), a microphone (50) for recording an audio file (45) corresponding to the content of the text file (90) and a processing software (70) combining the audio file (45) with a sound effects file (100) to produce the audio book.

## Description

### Field of the Invention

The invention relates to an audio book and a means for the manufacture of an audio book.

### Prior Art

Audio books are well-known in the art. Originally they were produced as LP (long playing) records. More recently cassettes and CDs (or DVDs) have been used to record stories. These have the advantage over LPs in that it is relatively easy for home-produced audio books to be produced. Cassette players have had a record function for many years; more recently the widespread use of personal computers with CD burners have allowed the home-production of audio CDs. Currently audio books are produced by recording the text and later editing the recording. Sound effects and background music can be added during the editing of the text. This procedure is time consuming and expensive. It is therefore only useful when producing professional audio books for sale.

Several patent applications are known relating to the production of audio books. International patent application WO-A-03/010733 (Kirwan et al, assigned to The Zone, Inc.) discloses a storybook with a separate audio recording and playback device. The storybook is in the form of pages and a separate device is provided which is usable with multiple storybooks. The audio recording device allows, for example, a parent to record the story such that the child can listen to the story. Furthermore the playback device allows the use of dual audio tracks in which one track is background material - such as sound effects - and the other is the current audio (e.g. story). The patent application does not, however, disclose how synchronisation is achieved between the background material and the story such that, for example, the sound effects occur in the correct place or the background music is appropriate (and synchronised) for the story.

A similar device is known from international patent application WO 03/073398 (Calabrese, assigned to the Walt Disney Company) which discloses a product and method for providing education with a virtual book. This patent application teaches the use of a single medium for storing book information and co-ordinated audio narration. However, this patent application does not disclose any means by which a user can record his or her voice.

There is a demand for recording stories. For example, suppose a parent is absent for several days and is unable to read the child's usual good-night story, then the child will be reassured if it is able to listen to its parent's voice.

In the UK, a scheme is known at HMP Dartmoor in which the prisoners record stories on to tape. The stories are digitally edited to remove any mistakes and background music and sound effects are added as appropriate (see http://www.literacytrust.org.uk/campaign/prisons.html#Storybook - downloaded on 5 October 2005). The addition of the background music and the sound effects makes the story more interesting. This scheme relies on post-editing of a recorded story which is time-consuming and requires specialised equipment.

It would be advantageous to provide a simple system for the recording of a story with appropriate sound effects and background music.

### Summary of the Invention

It is therefore an object of the invention to provide a method for the manufacture of audio books with synchronised effects.

In this context "synchronised" means that the effects occur at appropriate moments when listening to the audio book. The term "effects" includes but is not limited to sound effects and background music.

It is furthermore an object of the invention to enable the simple and inexpensive recording of an audio book.

It is furthermore an object of the invention to enable the manufacture of an audio book using recording by any user.

These and other objects of the invention are solved by a method for the manufacture of an audio book which comprises a first step of obtaining an authorisation key to access a text file on a server, a second step of displaying content of the text file at a personal computer, a third step of producing an audio file at the personal computer corresponding to the text file and a fourth step of combining the audio file with a sound effects file to produce the audio book.

The display of the content of the text file enables a user to make his or her voice recording of the content of the text file to produce a personalised audio book, rather than relying on audio books produced using, for example, actors. This enables the production of a "personalised" present for, for example, a child. The text file includes control items which control the manner in which the content of the text file is displayed at the personal computer.

The authorisation key is used to ensure that only text files - containing stories - are accessed for which the user is authorised. This could be, for example, for copyright reasons or to ensure that the user pays for access to the data file.

The invention further provides for a device for the manufacture of an audio book. The device comprises an authorisation key for authorising access to a text file, a display device for displaying content of the text file, a microphone for recording an audio file corresponding to the content of the text file and processing software combining the audio file with a sound effects file to produce the audio book.

Finally the invention also provides for a system for the recording of an audio book. The system comprises a server having a plurality of text files with content, a personal computer being connected over a network for accessing at least one of the plurality of text files, recording software for displaying the content of at least one of the text files and displaying the content on a display device, a microphone for recording an audio file corresponding to the content of at least one of the text files, a processing software for combining the audio file with a sound effects file corresponding to the accessed one of the plurality of text files to produce the audio book.

### Description of the Drawings

- Fig. 1: shows an overview of the system.
- Fig. 2: shows a flow diagram in which the main steps of the method are illustrated.
- Fig. 3: shows a screen shot for the selection of a text file.
- Fig. 4: shows a screen shot for the recording of the text files.
- Fig. 5: shows a screen shot for the upload of an audio file.

### Detailed Description of the Invention

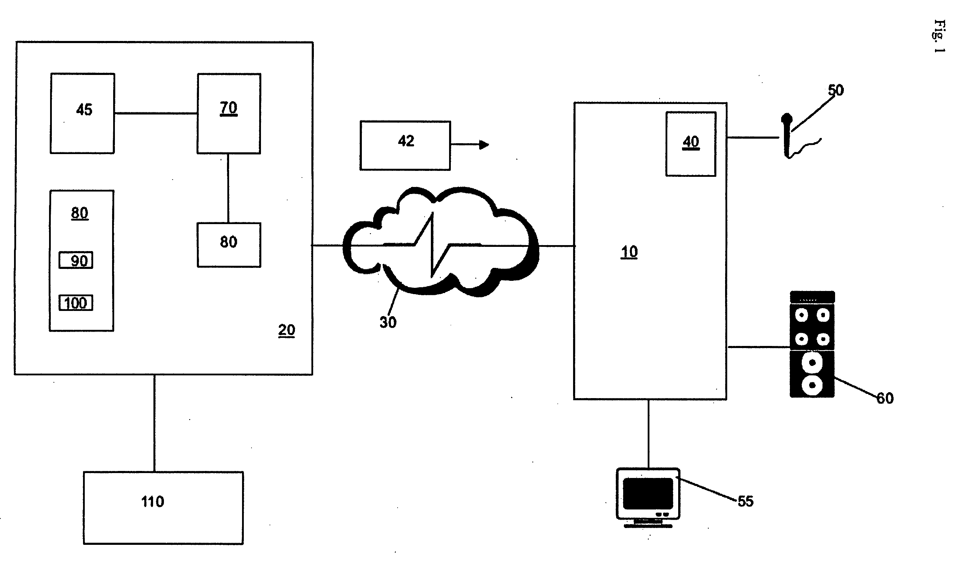

Fig. 1 shows an overview of a personal computer 10 connected to a server 20 through a network 30. The personal computer 10, the server 20 and the network 30 are well-known in the art and will not be described in more detail. The personal computer 10 is provided in one embodiment of the invention with recording software 40 as well as a microphone 50, a display device 55 and loudspeaker 60. The microphone 50 and the loudspeaker 60 are known in the art and will not be described in more detail. The recording software 40 works with processing software 70 on the server 20 to implement the invention as will now be described. It will be noted at this point that the recording software 40 includes an audio file 45 whose function will be explained later.

In another embodiment of the invention, the recording software is situated at the server 20. The personal computer 10 acts as a "dumb" terminal. The personal computer 10 will, of course, have drivers for the microphone 50, display device 55 and the loudspeaker 60.

The invention is described with respect to a personal computer 10. The term "personal computer" is intended to include not only desktop computers and laptop computers, but also PDAs, smart cellphones, and other devices which can be connected to the server 20 over the network 30. The network 30 could include, but is not limited to, the Internet or a mobile telephone network. This list is merely exemplary of the types of personal computers and is not intended to be limiting.

The processing software 70 is connected to one or more story data 80 which are also stored on the server. The story data 80 includes a text file 90 and an effects file 100. Any data storage method and/or protocol can be used to store the text file 90 and the effects file 100. In the preferred embodiment of the invention an XML format is used as will be illustrated.

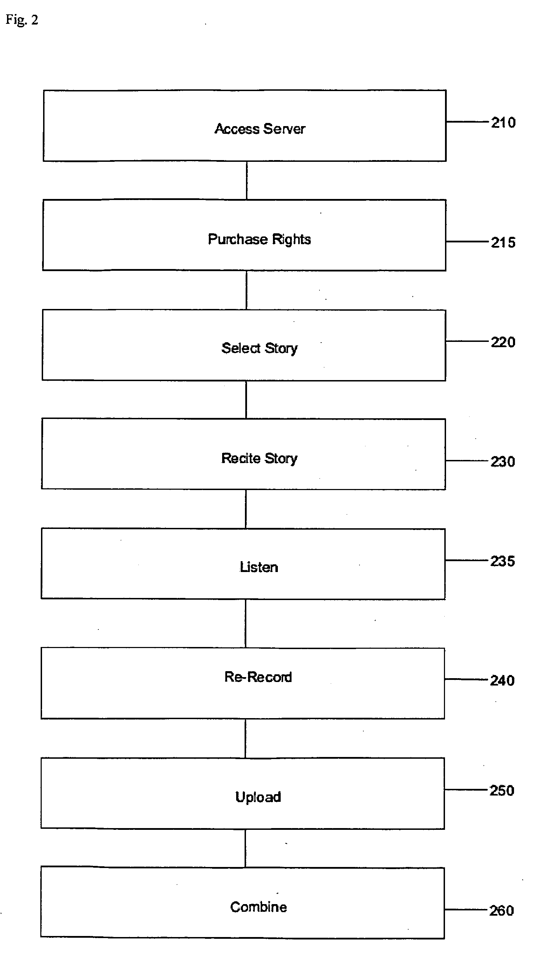

Suppose a user now wishes to record a story. The process for reading the story is illustrated in Fig. 2. In a first step 210 the user accesses the server 20 through the personal computer 10 from which the story data 80 can be downloaded. The server 20 or the personal computer 10 must be provided with the recording software 40. The recording software 40 is in one embodiment of the invention on the server 20. The recording software 40 could also be either installed from, for example, a CD-ROM previously purchased and installed on the personal computer 10 or the recording software 40 could be downloaded from the server 20. A configuration file 42 is downloaded from the server 20 (or from the previously purchase CD-ROM). The configuration file 42 has the following structure:

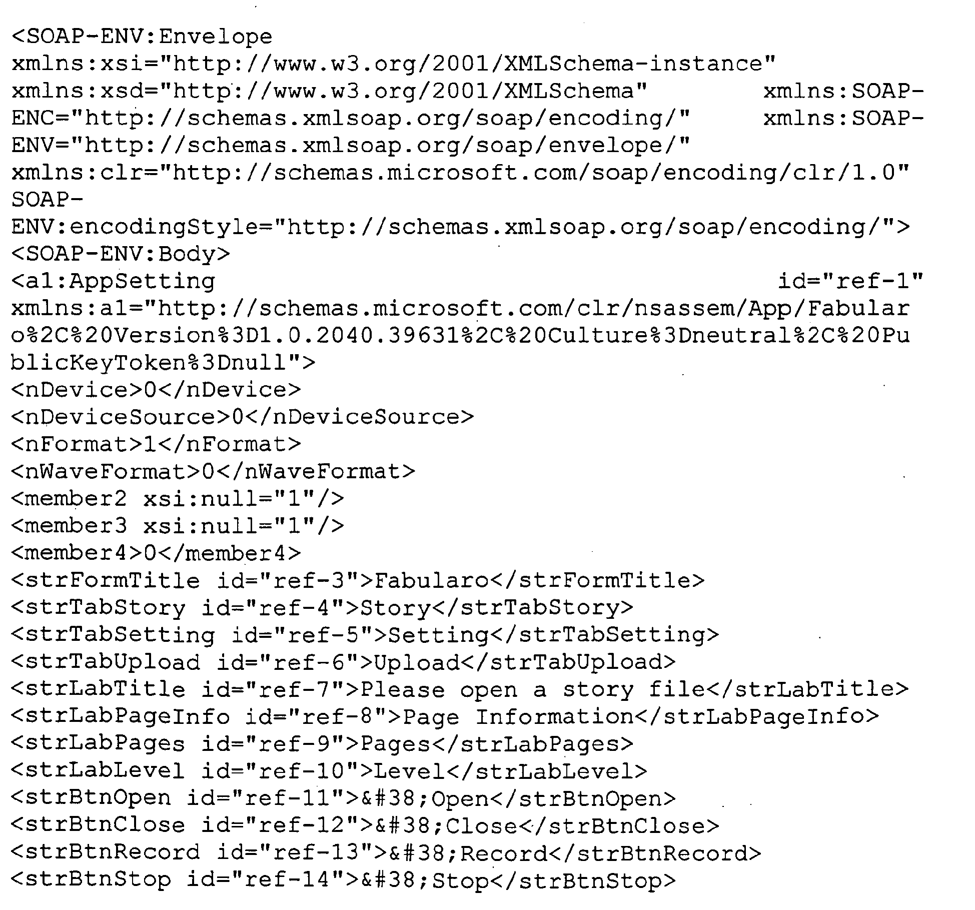

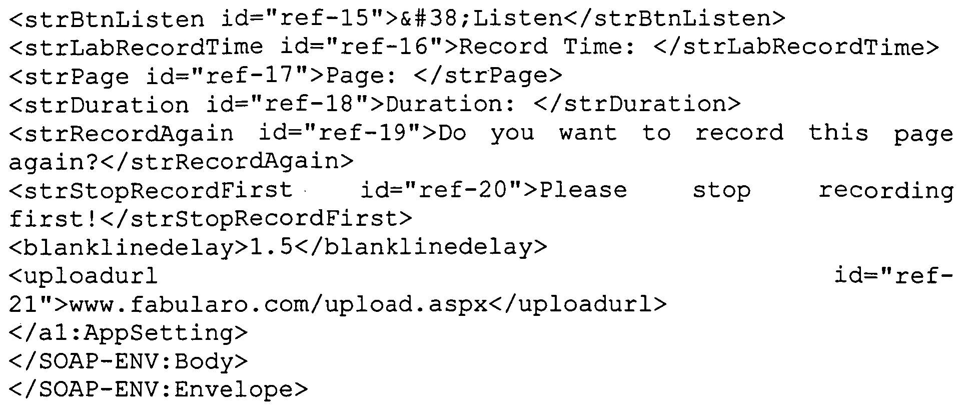

The configuration file 42 configures the recording software 40 as will be explained later. The user needs to purchase rights to a story which is to be produced as an audio book (step 215). This can be done either in a store - in which case the user is given a code word or other authorisation key - or online (in which case the authorisation key can be generated automatically or given to the user for later input). At least three possible methods of purchasing the story are conceivable.

In the first method, the user purchases, for example, in a bookstore, a book together with a CD-ROM or other storage medium. The CD-ROM or other storage medium includes the text file 90 which can then be run directly on the personal computer 10. The CD-ROM or other storage medium will include the authorisation key. The text file 90 could, of course, be purchased without the book. In the second method the user purchases the book in the bookstore together with an authorisation key - there is no need for the supply of the CD-ROM or other storage medium; in this case the text file 90 will be downloaded on connection to the server 20 (step 210) or will be directly accessed on the server 20. Finally in the third method the purchase of the text file 90 is carried out on-line. Payment can be made by credit card, debit card, invoice or in any number of payment methods known.

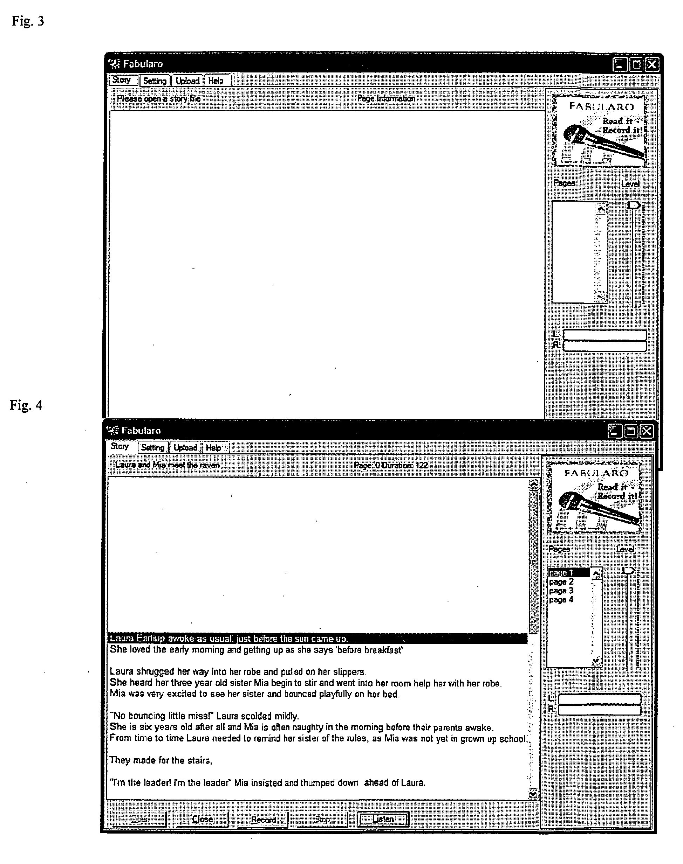

In the next step 220 the user selects which one(s) of the stories he or she would like to record. The authorisation key indicates which stories are available. The user is presented with a screen similar to that shown in Fig. 3. The user chooses - for example by selecting an appropriate entry using a mouse or scrolling through the entries using the cursor keys - and - if necessary - the text file 90 is presented on the display device 55 or is downloaded to the personal computer 10.

In one embodiment of the invention the sound effects 100 are not downloaded to the personal computer 100. However, the sound effects 100 could be downloaded if this was desired.

The text file 90 is in XML format. One exemplary embodiment is shown below:

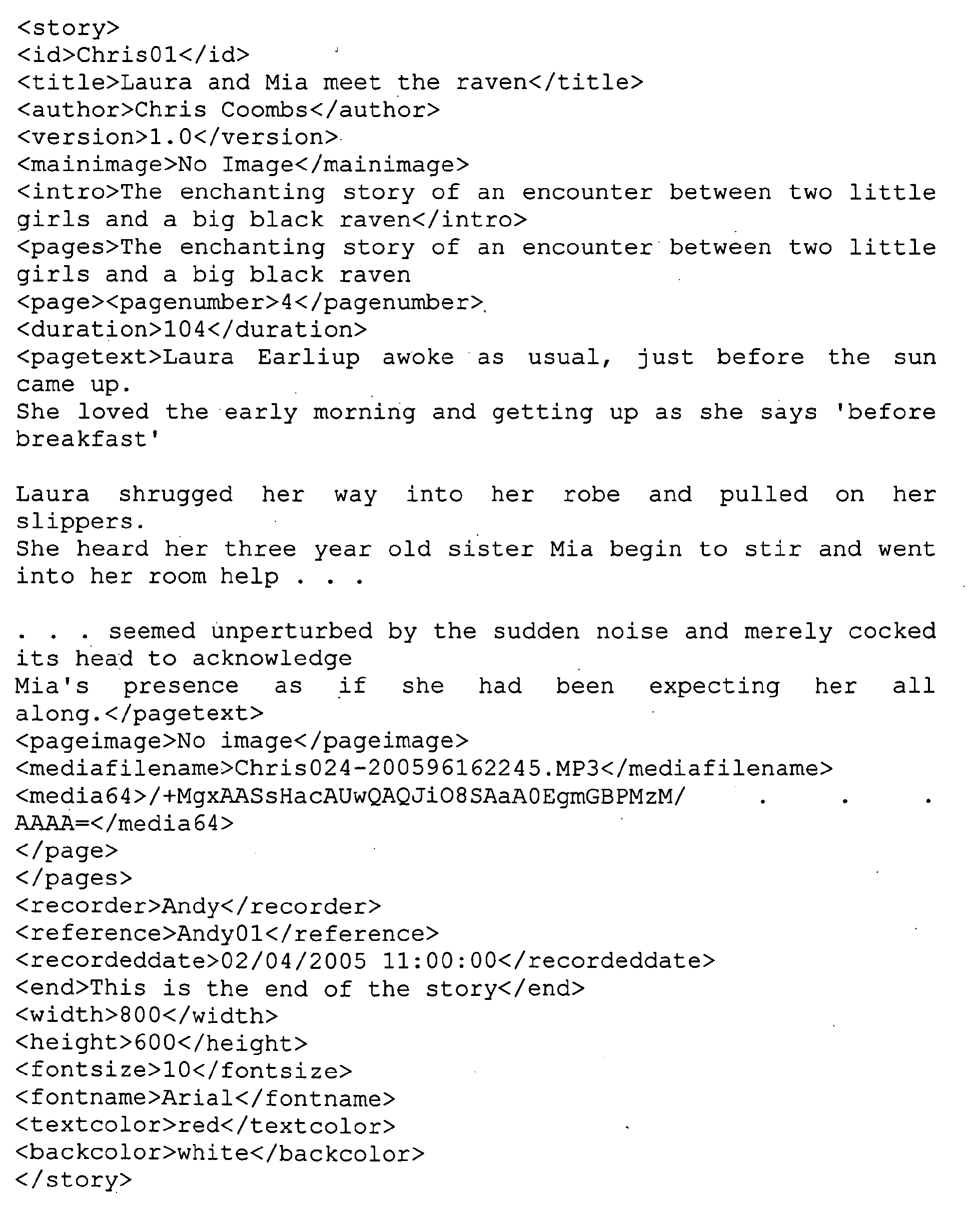

The tags <story> indicates the beginning of the story have a title given by the <title> tag.

The text file 90 has content which is divided into "pages" which are appropriate divisions of the text of the story. The beginning of one of the pages is indicated by the <page> tag and the end of the page by the </page> tag. A <duration> tag indicates the length of time it is expected that each page will last. The text file 90 also includes tags to indicate the manner in which the text is displayed on the display device 55. Such tags include, but are not limited to a <textcolor> tag to indicate the colour of the text, a <backcolor> tag to indicate the colour of the text background, a <fontsize> tag to indicate the size of the font and a <fontname> tag to indicate the type of font used.

On opening the recording software 40, the first page of the text file 90 is displayed (as shown in Fig. 4) on the display device 55 connected to the user's personal computer 10. It will be noted that the first line of the text is highlighted. The user now recites the story and the story is recorded (step 230) using the microphone 50. The manner of doing this is similar to an auto-cue. The audio is stored in the audio file 45 which may be either on the personal computer 10 or on the server 20. The text of the story scrolls up the screen a line at a time according to preset timings contained in the text file 90. The current reading line remains static and highlighted in one position (approximately in the centre of the window). Once a page has been recorded using the microphone 50 it is stored in one of the audio files 45 and can be listened to (using the loudspeaker 60) in step 235 and, if necessary, re-recorded in step 240 until the user is happy with the end result. The tag <mediafilename> is used to indicate the name of the actual file recorded (typically in MP3 or WAV format) for each page. Each time a page is recorded or re-recorde a new one of the audio files 45 is generated. On re-recording of the page, the previous version of the page is erased. It will be noted that at this stage in one embodiment of the invention, the audio file 45 will not include any sound effects or background music. These are introduced at a later stage.

The text file 90 includes control characters to enable the incorporation of the effects (sound effects and background music). For example, suppose the user needs to pause whilst reciting the story. A pause control character is inserted into the text file 90 which instructs the personal computer 10 to pause for a period of time indicated by the control character. In one embodiment of the invention the pause control character is indicated by a tilde character (i.e. ~) followed by a period of time. This would allow the insertion of an appropriate one of the sound effects during the pause. Of course, sound effects could also be inserted over the text and background music can also be inserted over the text.

It will be noted that the screen shots include tabs for "setting" which control the format in which the audio file 45 is recorded and also any necessary settings for the microphone.

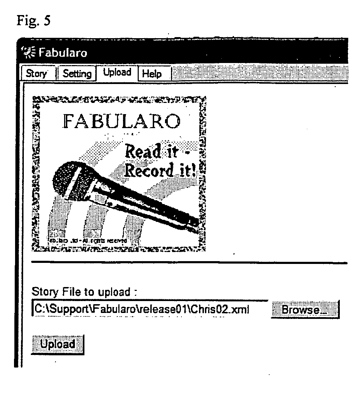

Once the user has completed the recording of the story he or she can select the "upload" tab in step 250 in order to upload the audio files 45 to the server 20 for further processing if the audio files 45 are stored on the personal computer 45. This is shown in Fig. 5 in which the user selects the file Chis02.xml for uploading. The upload is carried out, in one embodiment of the invention, by converting the audio files 45 to "base 64" format and embedding the audio files 45 into the original XML file and sending the original XML file to the server 20.

After the audio files 45 are uploaded to the server 20 - if necessary -, the audio files 45 can be combined with the effects file 100 to produce a recorded story file 110 in step 260 which is also stored on the server 20. There are a plurality of effect files 110, each one of which typically corresponds to one page recorded in one of the audio files 45. The recorded story file 110 can be then burnt to a CD-ROM for sending to the user (for example in the form of a gift package) or can be downloaded from the server 20 to the personal computer 10 and played on the personal computer 10 or burnt onto a CD-ROM by the user. The recorded story file 110 includes the recitation of the story and sound effects from the sound effects file.

The principle of the invention can also be used to enable a user to read an audio book to another person in real time. Suppose, for example, a mother is on a business trip and wishes to read a good night story to her child. The mother could sit in a hotel room and use a high-speed connection with the personal computer 10 to download the text file 60 and read the story. A plurality of audio files 45 are produced in real-time and uploaded to the server 20 on a regular basis (e.g. every few seconds). The plurality of audio files 45 are combined with the appropriate part of the effects file 10 to produce a plurality of recorded story files 110. The plurality of recorded story files 110 are then sent to another computer, television or other device in, for example, the child's bedroom so that the child has a story read to it incorporating appropriate effects.

The invention has been described with respect to the production of stories. However, it is equally applicable to the production of other types of audio books. For example, a book on dinosaurs could be illustrated with appropriate sound effects.

The term "effects" has been used in this description to encompass sound effects and background music. The term effects is not intended to be limited to sound effects and background music, but could also cover, for example, animation effects.

The invention has been described with respect to one embodiment. It will, however, be clear to those skilled in the art that the invention is not limited thereto. Rather the scope of the invention is to be interpreted in conjunction with the following claims.

## Claims

1. Method for the manufacture of an audio book comprising:
- a step of obtaining an authorisation key to access a text file (90) on a server;
- a step of displaying content of the text file (90) at a personal computer (10);
- a step of producing an audio file (45) at the personal computer (10) corresponding to the text file (90);
- a step of combining the audio file (45) with a sound effects file (100) to produce the audio book.

2. The method of claim 1 wherein the authorisation key is obtained through purchasing the rights to access the text file (90).

3. The method of claim 1 or 2, wherein the audio book is produced as a downloadable audio file or on a CD-ROM.

4. The method of any of the above claims, wherein the second step comprises the display the content of the text file on a display (45) and highlighting lines of text.

5. The method of any of the above claims, wherein the second step further comprises timing indications.

6. The method of claim 4 or 5, wherein the display of the text file (90) is presented in pages.

7. The method of any of the above claims wherein the text file (90) has control characters to later control the addition of effects.

8. A device for the manufacture of an audio book comprising:
- an authorisation key for authorising access to a text file (90);
- a display device (55) for displaying content of the text file (90);
- a microphone (50) for recording an audio file (45) corresponding to the content of the text file (90);
- a processing software (70) combining the audio file (45) with a sound effects file (100) to produce the audio book.

9. The system for the manufacture of an audio book comprising:
- recording software (40) for producing the display of the content of the text file (90) and for accepting audio input from the microphone (50).

10. A system for the recording of an audio book comprising:
- a server (20) having a plurality of text files (90) with content;
- a personal computer (10) connectable over a network (30) for accessing at least one of the plurality of text files (90);
- recording software (40) for displaying the content of at least one of the text files (90) and displaying the content on a display device (55);
- a microphone (50) for recording an audio file (45) corresponding to the content of at least one of the text files (90);
- a processing software (70) for combining the audio file (45) with a sound effects file (100) corresponding to the accessed one of the plurality of text files (90) to produce the audio book.

11. The system of claim 10 wherein the processing software (70) is on the server (20).

12. The system of claim 10 or 11 wherein the content of the text files (90) includes timing indications.

13. The system of one of claims 10 to 12 further including an authorisation key for authorising access to the at least one of the text files (90).

14. A computer-readable software for running on a computer (10) comprising:
- text information for producing text on a display device (55) connected to the personal computer (10);
- display control information for controlling the controlling the display of text on the display device (55);
- audio file creation information for controlling the creation of an audio file; and
- effect control information for controlling the addition of effects to the audio file.

15. Method for the presentation of an audio book comprising:
- a step (215) of purchasing rights to the audio book;
- a step (230) of recording the audio book to produce one or more audio files (45);
- a step (260) of combining the one or more audio files (45) with an effects file (100) to produce a recorded story file (110); and
- a step of presenting the recorded story file (110) in the form of the audio book.

16. Method for reading a story comprising:
- a step (215) of purchasing rights to the story;
- a step (230) of reciting the story to produce one or more audio files (45) at a first location;
- a step (260) of combining the one or more audio files (45) with one or more effects files (100) to produce one or more recorded story files (110) at a server (20); and
- a step of broadcasting the one or more recorded story files (110) at a second location distant from the first location.
